(19) Europäisches Patentamt
European Patent Office
Office européen des brevets

(11) **EP 4 462 087 A1**

(12) **EUROPEAN PATENT APPLICATION**

(43) Date of publication:
**13.11.2024  Bulletin 2024/46**

(21) Application number: **24174642.9**

(22) Date of filing: **07.05.2024**

(51) International Patent Classification (IPC):
**G01F 1/684** (2006.01)   **G01F 15/00** (2006.01)
**G01F 15/14** (2006.01)   **G01F 1/688** (2006.01)

(52) Cooperative Patent Classification (CPC):
**G01F 1/6842; G01F 15/00; G01F 15/005;
G01F 15/14;** G01F 1/6888

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.05.2023  IT 202300009204**

(71) Applicant: **Metersit Srl
35129 Padova (IT)**

(72) Inventors:
• **FERRARI, Francesco
35129 Padova (IT)**

• **FERRARI, Luca
20124 Milano (IT)**
• **MARCANTE, Marco
35129 Padova (IT)**
• **CARRARO, Giorgio
35129 Padova (IT)**
• **SANTI, Giovanni
35129 Padova (IT)**

(74) Representative: **Caruti, Filippo et al
Thinx S.r.l.
P.le Luigi Cadorna, 10
20123 Milano (IT)**

(54) **FLUID METER, IN PARTICULAR GAS METER, WITH LIMITED PRESSURE DROP**

(57)    The present invention relates to a fluid measuring device (1), which comprises a box-shaped hollow body (10) delimiting a measuring compartment (11). An inlet duct (12) and an outlet duct (13) allow a flow of fluid to circulate through the measuring compartment (11). In addition, measuring means (2; 20) are arranged inside the measuring compartment (11) and coupled to the outlet duct (13) in order to provide an indication of an amount of fluid flowing through the hollow body (10). In general, the meter has a maximum flow rate between 2.5 m³/h ≤ $Q_{max}$ ≤ 16.0 m³/h. Advantageously, the fluid measuring device (1) comprises a fluid-dynamic element (5) in fluid communication with the inlet duct (12), so as to be crossed by the flow of fluid before it enters the measuring compartment (11). In particular, the fluid-dynamic element (5) comprises a duct (51) having an inlet port (52) and an outlet port (53), wherein a ratio of the surface area of the outlet port (53) to the surface area of the inlet port (52) is between approximately 1 and approximately 3.5.

Fig.3

**Description**

TECHNICAL FIELD

The present invention relates to fluid meters, such as gas meters or water meters, and to methods for updating the software components of meters installed on site. More specifically, the invention relates to a meter according to the preamble of claim 1.

BACKGROUND ART

Gas measuring devices (meters) are widely used by the fuel gas industry to monitor the amount of gas consumed by both domestic, commercial and industrial users.

A measuring device installed on a branch of a distribution network always represents an obstacle to the fluid flow. As a result, the measuring device cause a phenomenon named "pressure absorption", also referred to in the industry as "pressure drop" of the meter. Pressure absorption is a datum that characterises each meter, and which must be taken into account by the installer when installing and starting the meter. The pressure drop depends on the flow of gas flowing through the meter; in particular, it increases as the flow rate increases, following a curve peculiar to the given meter.

In general, the total pressure absorption of a measuring device is determined by the sum of the absorption due to fluid-dynamic resistance and of that due to mechanical resistance. The former is basically due to the turbulences intrinsic to the passage of a gaseous fluid through a fluid-dynamically inefficient instrument, while the latter is due to the friction and inertia of any mechanical moving members. Considering gas meters provided with thermal-mass sensors, these meters are characterised by the total absence of mechanical elements that are moving or submitted to elastic deformation (e.g.: gears, membranes), so pressure absorption in this type of meters is determined only by absorption due to fluid-dynamic resistance.

The pressure drop must be kept within predetermined maximum values in order to ensure proper and efficient operation of the fluid distribution network. In this respect, several national laws and international regulations, such as EN 17526:2021 and Directive 2014/32/EU of the European Parliament and of the Council of 24 February 2014, define the constraints that each gas meter must fulfil in order to be marketed and installed in the local gas network.

In the art, in order to reduce the pressure absorption in a diaphragm-type meter, JP 6584872 proposes to round corners or edges formed by contiguous walls inside the meter, so that gas, while flowing from one to the other of the two walls, does not stagnate near the junction between the walls (if angled), or follows with greater continuity the variation in path determined by the junction between the walls (if edged).

In the case of meters with a thermal-mass sensor, the Applicant has determined that this type of solution does not guarantee compliance with the requirements. Meters with a thermal-mass sensor, in fact, while not having elements subject to movement or elastic deformation that can cause mechanical resistance, are provided with an element generally referred to as a "flow lineariser", which is necessary for optimal operation of the thermal-mass sensor but which can cause significant fluid-dynamic resistance.

For example, document CN 208833306 discloses a "rectifying device" inserted, as an additional element, inside the meter compartment, connected to the inlet nozzle. Such a device has a dual function: slowing down part of the incoming gas, and filtering out solid particles or impurities in the gas introduced into the meter. This rectifying device essentially consists of a cylindrical tube or duct, inside which a smaller duct is coaxially inserted. The inner duct has a truncated-cone cavity and an outer profile characterised instead by a "protrusion" or diametrical enlargement, which runs along the entire cross section of the inner duct. A part of the gas flow coming from the meter inlet nozzle is subject to a velocity reduction, due to the progressive increase in the tube section. Reducing the velocity of the portion of the gas flow passing through the centre section causes a "stabilisation" of the gas flow through the meter compartment, which then continues on to the outlet nozzle. However, the remaining gas passes through the bottleneck defined between the inner duct body and the inner surface of the enclosing cylindrical structure, and is subject to a increase in velocity. In addition, the fronts of the two portions of the gas flow meeting at different velocity generate turbulence.

Consequently, the rectifying device of CN 208833306 does not allow to reduce or control pressure drops associated with the meter wherein it is installed. By contrast, the generation of turbulence near the outlet of the rectifying device can worsen the problem of pressure drops.

Furthermore, US 2020/056916 discloses a gas meter comprising a body. The gas meter further comprises a flow-rate measuring unit arranged inside the body. The flow-rate measuring unit has a passage of the measuring flow with a straight tubular shape and is provided with an inlet port and outlet port through which the fluid to be measured passes, and a shut-off valve positioned in an extended section extending from the outlet port of the gas meter body inwards. The inlet port of the measuring unit is tightly connected to the extended section so that they are in fluid communication.

US 2019/003868 discloses a gas meter with a hollow body accessible through inlet and outlet ports and a shield plate located at a predetermined distance from a meter inlet port. In addition, the gas meter includes a flow-rate measuring device that measures the flow rate of the fluid and a connection element that connects the outlet of the flow-rate measuring device and the outlet of the meter. In addition, the meter inlet, shield plate, flow-rate measuring device, connecting element and meter outlet are positioned linearly in this order.

JP 2021/117215 discloses an ultrasonic flow rate measuring device provided with an inlet passage separated from an inlet buffer region by a first partition wall projecting towards the inner face of a meter body. A central hollow part of the body houses a measuring unit arranged between the inlet buffer region and an outlet buffer region. The measuring unit comprises a tubular body provided with inlet and outlet ports into which a flow of fluid flows between the inlet passage and outlet passage of the measuring device.

JP 2021/105545 discloses an ultrasonic gas meter comprising a plurality of measuring tubes, wherein the accuracy of the gas flow measurement can be increased by stabilising the flow of gas flowing into or out of each measuring tube. The ultrasonic gas meter includes a gas inlet, a gas outlet, a plurality of tubular-shaped measuring tubes connecting an inflow lung and an outflow lung, flow-rate measuring units for measuring the gas flow rate of the measuring tubes, and a plurality of rectifier plates located in at least one of the inflow lung and the outflow lung.

JP 2017/129391 discloses an ultrasonic gas meter provided with a filter formed by a cylindrical element, having an outer circumferential shape corresponding to the surface of the inner wall of an incoming flow path, and an end wall developing continuously at one end of the cylindrical element and provided with a port constituting a gas passage. The filter is held in place by the inner wall surface of the inlet flow path.

JP H 0669748 discloses a flow meter in which a flow-rate measuring unit is housed in a box-shaped casing, and a switch is provided on the front surface of the casing. The switch on the measuring unit faces an actuating member so that it can be operated by it without using intermediate connecting elements.

The proposed structures propose gas meters with flow-rate meters provided with structures that require the flow of gas to be measured to pass through a duct in which a measuring instrument is positioned. These solutions aim to improve the measuring of the flow rate of the gas passing through the gas meter.

OBJECTS AND SUMMARY OF THE INVENTION

An object of the present invention is to overcome the drawbacks of the prior art.

In particular, the object of the present invention is to provide a device for measuring an amount of fluid flowing through a hydraulic network, such as a gas meter, characterised by a limited pressure drop by means of a simple and efficient solution.

A further object of the present invention is to propose a fluid measuring device, such as a gas meter, provided with a fluid-dynamic element suitable for adjusting the incoming fluid flow in order to limit the pressure drop of the gas meter.

These and other objects of the present invention are achieved by a system incorporating the features of the annexed claims, which form an integral part of the present description.

According to a first aspect, the present invention relates to a fluid measuring device comprising a hollow box-shaped body delimiting a measuring compartment. The fluid measuring device comprises an inlet duct and outlet duct, which allow a flow of fluid through the measuring compartment. Measuring means are arranged within the measuring compartment and are coupled to the outlet duct in order to provide an indication of an amount of fluid flowing through the hollow body, entering through the inlet duct and exiting from the outlet duct. The meter has a maximum flow rate between approximately 2.5 m$^3$/h and approximately 16.0 m$^3$/h

In addition, the fluid measuring device comprises a fluid-dynamic element, which is in fluid communication with the inlet duct. The fluid-dynamic element comprises a duct that is crossed by the entire flow of fluid coming from the inlet duct before it enters the measuring compartment. The duct comprises an inlet port, facing the inlet duct, and an outlet port, facing the measuring compartment. A ratio of the surface area of the outlet port and the surface area of the inlet port is between approximately 1 and approximately 3.5.

The fluid measuring device according to the present invention makes it possible to substantially limit the pressure drop caused by the fluid measuring device by means of a simple, rational and particularly efficient solution.

Tests carried out by the Applicant have shown that the fluid measuring device according to an embodiment of the present invention achieves an improvement in pressure drop, compared to a corresponding known fluid measuring device in which the pressure drop measured at the value of the maximum flow rate of 10,000 1/h, i.e. 10 m$^3$/h (thus corresponding to the European meter class G6), when devoid of any fluid-dynamic device, reaches a value between 210 Pa and 220 Pa - thus exceeding the limit set at 200 Pa by EN 17526:2018 standard and thus does not comply with the requirement. On the contrary, the fluid measuring device according to the present invention has a limited pressure drop between 180 Pa and 190 Pa - thus complying with the requirement of EN 17526:2018 standard. The tests performed are based on volumetric flow rate measurements in standard litres/hour, equivalent to the flow rate of a flow of air passing through at a temperature of 20 °C and a pressure of 1.01325 bar (101,325 Pa), parameters associated with an air density of 1.2 kg/m$^3$.

The Applicant has therefore inferred that, surprisingly, the fluid flow adjustment achieved through the fluid-dynamic element of the meter according to the present invention - in particular, a decrease in fluid flow velocity - has a mitigating effect on possible turbulence within the fluid flow. Ultimately, this turbulence mitigation leads to a reduction in the overall fluid-dynamic resistance of the meter and, therefore, in the pressure drop associated with the meter.

In particular, as it flows through the fluid-dynamic element, the gas flow is submitted to a reduction in velocity.

Assuming, for example, that a first velocity $v_1$ corresponds to the velocity of the flow at the inlet of the fluid-dynamic element - at the inlet port which has a surface area $S_i$ - and that a second velocity $v_2$ corresponds to the velocity of the flow exiting the fluid element - at the outlet port which has a surface area $S_o$ -, in relation to the fluid continuity equation we have:

$$S_i \cdot v_1 = S_o \cdot v_2,$$

as $S_i < S_o$ then the first velocity is necessarily greater than the second velocity: $v_1 > v_2$. By appropriately adjusting the ratio of the sizes of the flow element ports, it is, therefore, possible to reduce the pressure absorption of the entire gas meter - i.e. its pressure drop.

In one embodiment, the duct of the fluid-dynamic element has a side section increasing from a minimum value at the inlet port to a maximum value at the outlet port.

For example, the duct takes on a truncated cone or pyramid shape in one embodiment. In this case, the inlet port corresponds to the smaller base of the truncated cone or pyramid and the outlet port corresponds to the larger base of the truncated cone or pyramid.

In another embodiment, the duct has a variable cross-section profile defined by either a predetermined curve or, alternatively, a broken line comprising a plurality of straight segments connected in a sequence.

Preferably, an angle between each pair of adjacent segments takes on a different value from an angle defined by another pair of adjacent segments. In detail, the angle between a pair of adjacent segments is defined as the angle between the segment closest to the outlet port of the segment pair and a straight line parallel to a development direction of the duct passing through the junction point between the two segments.

The profile of the fluid-dynamic duct can be designed according to a number of different criteria depending on the needs of the specific application.

In one embodiment, the meter has a maximum flow rate of 10.0 m$^3$/h. In this case, a ratio of the surface area of the outlet port to the surface area of the inlet port is between approximately 1 and approximately 3.

Alternatively or additionally, a main length of the duct is between approximately 25 mm and approximately 55 mm, preferably between approximately 30 mm and approximately 50 mm when the maximum flow rate is 10.0 m$^3$/h.

This dimensioning of the fluid-dynamic element according to the present invention allows to obtain the best performance in terms of pressure drop limitation.

In one embodiment, the fluid-dynamic element can be coupled to a flow shut-off device housed inside the measuring compartment and in turn coupled to the inlet duct of the hollow body. In this case, the surface area of the inlet port substantially corresponds to an outlet port of the flow shut-off device.

Thanks to this solution, the fluid flow is not substantially altered at the interface between the flow interception device and the fluid-dynamic element.

In one embodiment, the measuring means comprises a measuring duct in fluid communication with the outlet duct. In this case, preferably, the fluid-dynamic element, the flow shut-off device and the inlet duct define an inlet assembly that extends into the measuring compartment along a direction parallel to a direction along which the measuring duct of measuring means extends.

In one embodiment, the fluid-dynamic element is dimensioned so that the outlet port of the duct is at a minimum distance from a wall of the hollow body or from another obstacle to the fluid flow comprised within the measuring compartment not lower than approximately 5.0 mm, preferably not lower than approximately 20.0 mm.

The Applicant has determined that by keeping the minimum distance to an obstacle within the above-mentioned limits allows to achieve a higher effectiveness in reducing the pressure drop of the fluid measuring device.

In one embodiment, the outlet port of the fluid-dynamic element faces a wall of the hollow body opposite a wall in which the outlet duct is formed.

In one embodiment, the fluid-dynamic element comprises a cylindrical or prismatic body.

This body structure is particularly efficient and rational.

In one embodiment, the fluid-dynamic element is made of thermoplastic material by means of an injection moulding process.

Injection moulding allows for a simple and efficient mass production of the fluid-dynamic element.

Furthermore, due to the cylindrical or prismatic geometry of the outer contour of the fluid-dynamic element, the latter is easier to manufacture and remove from the injection mould, for example, than an object with a truncated-cone outer shape.

Preferably, the fluid-dynamic element also comprises a plurality of gaps and a plurality of partition walls, each placed between a pair of gaps.

The gaps are formed in a cylindrical or prismatic body wall as blind cavities that are open at the inlet port and extend inside the body towards the outlet port. Preferably, the gaps have a cross section decreasing in the direction from the inlet port to the outlet port.

The gaps reduce an actual thickness of the body of the fluid-dynamic element, in particular, in the portion facing its inlet section. As a result, a lightweight fluid-dynamic element is obtained, that is made from small amounts of material. Furthermore, in case it is made by injection moulding, significant differences in thickness between different portions of the fluid-dynamic element are avoided. These differences can lead to certain forming defects that can affect the functionality of the fluid-dynamic element or to deformations with respect to the desired structure - in particular, of the duct.

In conclusion, the presence of the gaps ensures that the fluid-dynamic element achieves maximum regularity in its shape (in particular, its inner shape), as well as the absence of possible surface defects that could affect, even slightly, the characteristics of the gas flowing through it. Consequently, the fluid-dynamic effects generated by the fluid-dynamic element are reliable, consistent and repeatable.

Preferably, at least one suitable fixing element is provided to allow the diffuser to be fastened to a flow shut-off device housed inside the measuring compartment and in turn coupled to the inlet duct of the hollow body. Even more preferably, the fixing element is formed integral with a cylindrical or prismatic body.

A different aspect of the present invention relates to a kit comprising a fluid measuring device, for example a gas meter, and a fluid-dynamic element. The fluid measuring device comprises a hollow body, which delimits a measuring compartment wherein a fluid measuring system is arranged. The fluid enters the measuring compartment through an inlet duct and leaves the access compartment through an outlet duct. The fluid-dynamic element defines an adjustment duct and is coupled to the fluid meter so that the duct is in fluid communication with the inlet duct of the fluid measuring device. In particular, the duct comprises an inlet port and an outlet port. In particular, the surface of the inlet port is smaller than the surface of the outlet port.

Further features and objects of the present invention will become more evident from the description below.

BRIEF DESCRIPTION OF THE DRAWINGS

The invention will be described below with reference to some examples, provided for explanatory and non-limiting purposes, and illustrated in the annexed drawings. These drawings illustrate different aspects and embodiments of the present invention and reference numerals illustrating structures, components, materials and/or similar elements in different drawings are indicated by similar reference numerals, where appropriate.

Figure 1 is an exploded axonometric view of a gas meter according to an embodiment of the present invention;

Figure 2 is an exploded axonometric view of a hollow body of the gas meter of Figure 1;

Figure 3 is an axonometric view of the hollow body of the gas meter of Figures 1 and 2 wherein a closing wall has been removed to show the components arranged inside the measuring compartment of the hollow body;

Figure 4 is an axonometric view of a fluid-dynamic element of the gas meter according to an embodiment of the present invention;

Figure 5 is top plan view of the fluid-dynamic element of Figure 4;

Figure 6 is a bottom plan view of the fluid-dynamic element of Figure 4;

Figure 7 is a side section view along a section plane V-V of the fluid-dynamic element of Figure 4;

Figure 8 is a front view of a gas meter according to an alternative embodiment of the present invention, wherein a hollow body part has been removed to show the components inside the measuring compartment of the hollow body;

Figure 9 is a schematic side view of a duct of a fluid-dynamic element according to another embodiment of the present invention;

Figure 10 is a diagram plotting the pressure absorption as a function of the flow rate for three gas meters, two of which are according to as many embodiments of the present invention;

Figures 11A and 11B show fluid flow simulations in a gas meter according to the prior art and in a meter according to an embodiment of the present invention, respectively, and

Figures 12A and 12B show pressure simulations in a gas meter according to the prior art and in a meter according to an embodiment of the present invention, respectively.

DETAILED DESCRIPTION OF THE INVENTION

Some preferred embodiments will be described in detail below, although the invention is susceptible to various alternative modifications. It must in any case be understood that there is no intention to limit the invention to the specific embodiment shown, but, on the contrary, the invention intends covering all the modifications, alternative and equivalent constructions that fall within the scope of the invention as defined in the claims.

Unless otherwise defined, all the terms of the art, notations and other scientific terms used herein are intended to have the meanings commonly understood by those skilled in the art to which this description belongs. In some cases, terms with commonly understood meanings are defined herein for clarity's sake and/or ready reference; the insertion of such definitions in the present description must therefore not be interpreted as representative of a substantial difference with respect to what is generally understood in the art.

The terms "comprising", "having", "including" and "containing" are to be understood as open terms (i.e. the meaning "comprising, but not limited to") and are to be considered as a support also for terms such as "essentially consist of", "essentially consisting of", "to consist of" or "consisting of".

The use of "for example", "etc.", "or" indicates non-exclusive alternatives without limitation, unless otherwise indicated. The use of "includes" means "includes, but not limited to" unless otherwise indicated.

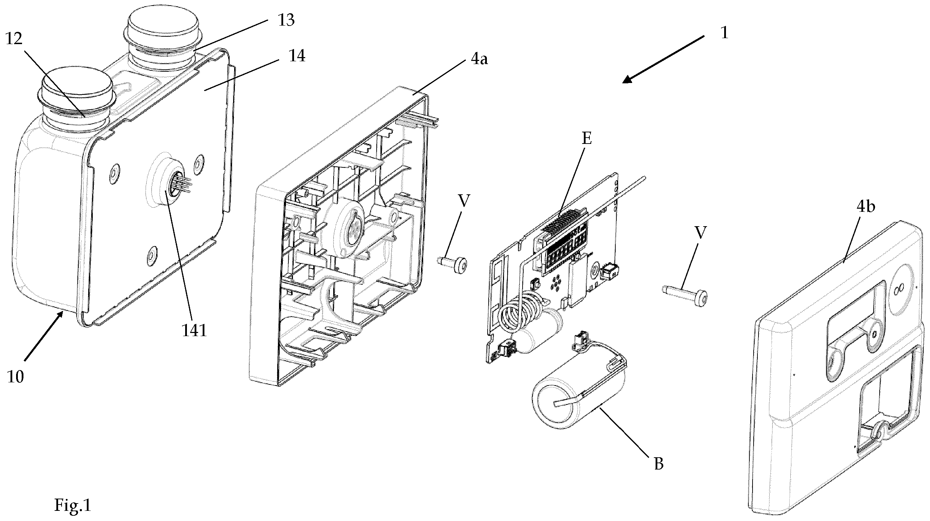

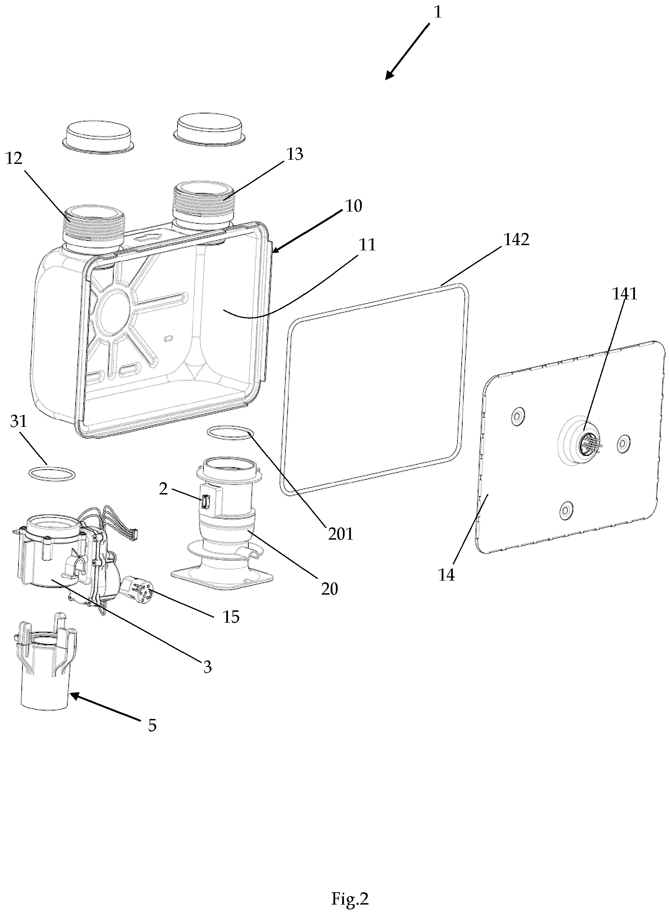

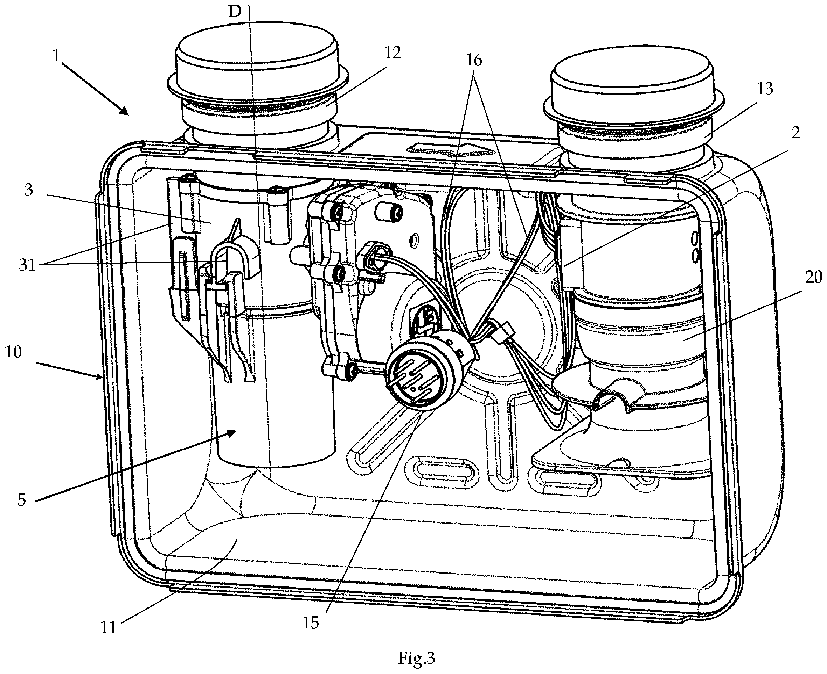

With reference to Figures 1-3, a preferred embodiment of a gas meter 1 is shown.

The gas meter 1 comprises a hollow body 10 that defines in its interior a measuring compartment 11 in which a sensor 2 and a flow shut-off element, for example, a spherical shutter valve, 3 are housed. An inlet duct 12 and an outlet duct 13 for the gas are formed in the walls of the hollow body 10 (which are shown closed by respective storage caps, removed upon connection to a gas distribution network).

In the example of Figures 1-3, the sensor 2 is of the thermal-mass type and is mounted on a measuring duct 20 in fluid communication with the outlet duct 13. The measuring duct 20 is designed to avoid, or at least minimise, the creation of turbulence in the gas flowing therein. However, the presence of the measuring duct 20 can create turbulence in the fluid inside the measuring compartment and thus a pressure drop. As known per se, and for this reason we will not go into more detail on its operation, the sensor 2 comprises a pair of thermocouples placed on opposite sides of a resistor. The latter heats the gas flowing through the measuring duct 20 and thus creates a temperature difference between the two thermocouples that is proportional to the value of such gas flow.

The hollow body 10 is closed by a cover 14, preferably made of metal, on which - outside the measuring compartment 11- a casing consisting of two shells, a base shell 4a - adapted to be in contact with the cover 14 - and a cover shell 4b - facing the external environment in use -, preferably made of plastic material, is mounted. An electronic processing unit E, configured for the remote reading and remote management of the gas meter, and a battery B connected to it, to supply power energy to the electronic processing unit E, are placed inside the casing.

The electronic processing unit E is connected to the sensor 2 and to the flow shut-off device 3 by a connector 15 wherein a set of cables 16 are gathered, forming a serial connection by means of which the electronic processing unit sends control signals to drive the flow shut-off device 3 (for example, to open or close a valve), carrying the power supply from the battery B to the sensor 2 and the flow shut-off device 3, and serving for the transmission of the measured values detected via the sensor 2.

In order to enable the electrical connection between the connector 15 and the electronic processing unit E, the cover 14 comprises a connector system 141 adapted to receive the connector 15 and couple to a respective port of the electronic processing unit E through a corresponding opening provided in the base shell 4a.

Preferably, the base shell 4a and the electronic processing unit E are fastened to each other and to the cover by means of fixing elements such as screws V. Otherwise, the cover shell 4b is fastened to the base shell 4a by means of one or more complementary snap-on fixing elements included in both shells 4a and 4b of the casing. Even more preferably, the gaskets 142, 31 and 201 ensure a tight sealing of the contact regions between the hollow body 10 and the cover 14, the flow shut-off device 3 and the measuring duct 20, respectively.

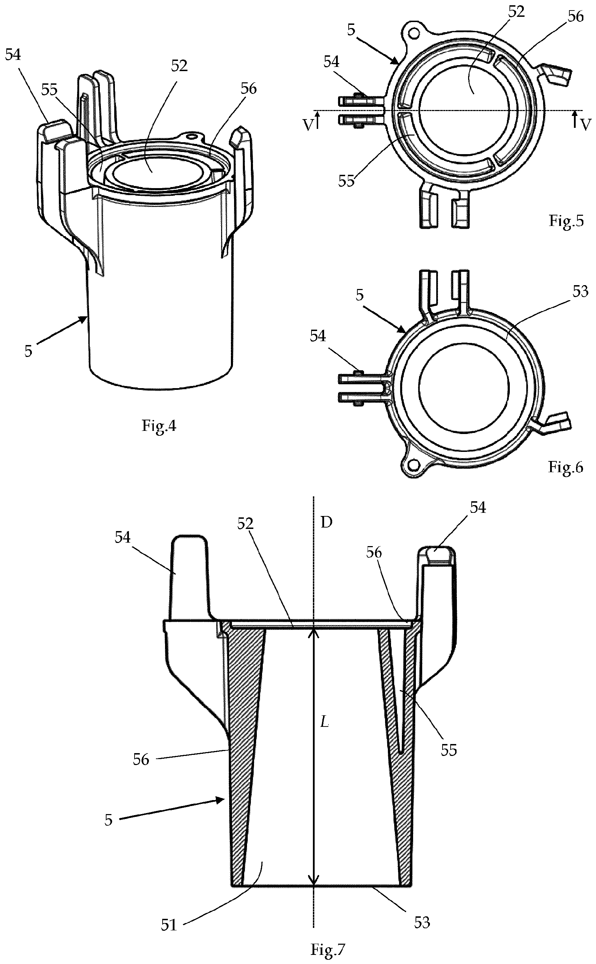

In the embodiment of the present invention, the gas meter 1 further comprises a fluid-dynamic element or diffuser 5 of which Figures 4-7 are axonometric, plan, from above, from below and in cross-section, along a section plane V-V, views, respectively. The diffuser 5 is coupled to the flow shut-off device 3 through which the gas enters the measuring compartment 11, as shown in Figure 1. Consequently, the gas flow entering the gas meter 1 passes through the diffuser 5 before entering the measuring compartment 11.

In the embodiment considered, the diffuser 5 is a hollow body extending for a main length $L$ along a development direction D, along which a duct 51 of the diffuser 5 - also with a length $L$- also extends. Furthermore, the diffuser 5 comprises an inlet port 52 and an outlet port 53 accessing the duct 51 having a substantially transverse arrangement, preferably perpendicular, to the development direction D.

Preferably, the inlet port 52 and the outlet port 53 are on axis with each other - that is, a centre or midpoint of the surface of the inlet port 52 is aligned with a centre or midpoint of the surface of the outlet port 53 on the development direction D or a direction parallel thereto.

The inlet port 52 has a surface area $Si$ lower than the area $So$ of the outlet port 53. In the embodiment shown, the duct 51 has the shape of a truncated cone with a smaller base corresponding to the inlet port 52 and a larger base corresponding to the outlet port 53. In this case, the inlet port 52 has a diameter $di$ lower than the diameter $do$ of the outlet port 53.

Having defined a form ratio $R$ as the ratio between the surfaces $So$ and $Si$ of the outlet port 53 and the inlet port 52, respectively, the Applicant has determined a range of values of the optimal form factor $R$ in order to adjust the pressure drop of a gas meter 1 characterised by a maximum flow rate $Q_{max}$ of between 2.5 m³/h $\leq Q_{max} \leq$ 16.0 m³/h, for example approximately 10.0 m³/h:

$$1 < R < 3.5, \text{ preferably } 1 < R \leq 3. \qquad (1)$$

Furthermore, the Applicant has determined a range of values of the main length $L$ of the duct 51 (i.e., distance of inlet port 52 and outlet port 53) in order to adjust the pressure drop of a gas meter 1 characterised by a maximum flow rate $Q_{max}$ between 2.5 m³/h $\leq Q_{max} \leq$ 16.0 m³/h, for example approximately equal to 10.0 m³/h:

$$25 \text{ mm} < L < 55 \text{ mm, preferably } 30 \text{ mm} \leq L \leq 50 \text{ mm}. \qquad (2)$$

For example, in the exemplary embodiment shown, the duct 51 is characterised by the following parameters:

- the diameter $di$ of the inlet port 52 is approximately 20.0 mm,

- the diameter $do$ of the outlet port 53 is approximately 28.0 mm,

- the surface area $Si$ of the inlet port 52 is approximately 314 mm², 

- the surface area $So$ of the outlet port 53 is approximately 615 mm², and

- the length $L$ of the duct 51 is approximately 45.7 mm.

In this case, the form ratio $R$ is equal to R = 615/314 = 1.96.

In the above example, the measuring compartment 11 has the following inner dimensions: width 166 mm, height 114 mm, depth 54 mm.

As can be appreciated in Figures 1-3, the inlet duct 12, the flow shut-off element 3 and the diffuser 5 form an inlet assembly through which the gas flows into the measuring compartment 11 of the hollow body 10. In parallel, the measuring duct 20 of the sensor 2 and the outlet duct 13 form an outlet assembly through which the gas leaves the measuring compartment 11 delimited by the hollow body 10. Preferably, the inlet assembly and outlet assembly extend within the measuring compartment 11 with their respective main extension lengths essentially parallel to each other. Even more preferably, the outlet port 53 of the diffuser 5 - through which the gas enters the measuring compartment 11 - faces the same direction as the inlet port of the measuring duct 20 - through which the gas leaves the measuring compartment 11.

Advantageously, though not limitedly, the flow shut-off element 3 and, preferably, the inlet duct 12, define fluid ducts having a transverse area substantially corresponding to the area of the inlet port 52 of the diffuser 5. Even more preferably, the flow shut-off element 3 and the inlet duct 12 define a fluid duct with the duct 51 of the diffuser 5 extending along the development direction D.

Still not limitedly, the outlet port 53 of the diffuser 5 lies on a plane parallel to a plane on which a port of the inlet duct 12 and/or a port of the outlet duct 13 lies, such ports acting as an interface between the inside of the gas meter 1 and the outside - e.g., tubes to which the gas meter 1 is connected. As shown in Figures 1-3, the outlet port 53 of the diffuser 5 faces a bottom wall of the hollow body 10 opposite a wall thereof in which the outlet duct 13 - as well as the inlet duct 12 - is formed.

In the exemplary embodiment of Figures 4 to 7, the inlet port 52 has a surface area substantially corresponding to an outlet port of the flow shut-off device 3. In other words, when the diffuser 5 is coupled to the flow shut-off device 3, for the gas flowing through the flow shut-off device 3 and diffuser 5, there is not substantially a continuity solution between the cavity of the flow shut-off device 3 (when open) and the cavity 51 of the diffuser.

In addition, the Applicant has determined that the outlet port 53 of the diffuser must be positioned at a minimum threshold distance from an obstacle to the flow of gas - *e.g.,* an inner wall of the measuring compartment 11 and/or another inner component causing an opposition or obstruction to the flow of gas - exiting the diffuser 5. In particular, the minimum distance between the outlet port 53 and the obstacle must be no lower than approximately 5.0 mm. Preferably, the minimum distance between the outlet port 53 and said obstacle should be no lower than approximately 20.0 mm.

The Applicant has also determined that the structure of the diffuser 5 shown in Figures 4-7 provides a particularly efficient, robust and reliable fluid-dynamic element.

In detail, the diffuser 5 is made with a substantially cylindrical shape that encloses the truncated-cone duct 51 described above. Consequently, a thickness of the diffuser walls - i.e. a cross-sectional area thereof - is progressively decreasing in the direction from the inlet port 52 to the outlet port 53.

The diffuser 5 comprises one or more fixing elements 54a, 54b adapted to fix the diffuser to the body of the flow shut-off device 3. In the embodiment shown, the fixing elements 54 comprise a plurality of first fixing elements 54a based on elastic deformation - *e.g.,* adapted to perform a "*snap-like*" engagement with corresponding receiving elements 31 formed on the body of the flow shut-off device 3, and one or more second fixing elements 54b each adapted to receive a screw, bolt, pin or other similar element (not shown) that also engages a corresponding fixing element (not shown) formed on the flow shut-off device 3. In the example considered, the fixing elements 54a, 54b protrude from an outer side part of the diffuser body near the inlet port 52 and extend along a direction substantially parallel to the direction D opposite to the duct 51. Preferably, the fixing elements 54a, 54b are made integral with the body of the diffuser 5.

In addition, a plurality of smaller gaps or cavities are formed in the body of the diffuser 5 - three 55 gaps in the example considered. The gaps are formed into the body wall and are open on the diffuser side at the inlet port 52 of the duct 51. The gaps extend inside the body towards the outlet port 53. The gaps have a decreasing cross-section in the direction from the inlet port 52 to the outlet port 53 (as can be seen in Figure 5). In particular, the gaps 55 are blind cavities, i.e. impervious to fluids from the side at the outlet port 53 of the duct 51. The gaps 55 are separated from each other by a wall or partition, three partition walls 56 are provided in the example considered.

Finally, the body of the diffuser 5 comprises a circular shoulder 56 with a radius larger than the inlet port 52 and formed at the latter. The shoulder 56 defines a receiving housing adapted to receive an end portion of the flow shut-off device 3. Thus it is possible to achieve an optimal coupling between the flow shut-off device 3 and the diffuser 5 by ensuring a continuity in the overall duct comprising the inlet duct 12, the flow shut-off device 3 and the diffuser 5 crossed by the gas entering the gas meter 1. Preferably, the inlet duct 12, the flow shut-off device duct 3 and the duct 51 of the diffuser 5, when in fluid communication, are coaxial.

However, it is clear that the above examples must not be interpreted in a limiting sense and the invention thus conceived is susceptible of numerous modifications and variations.

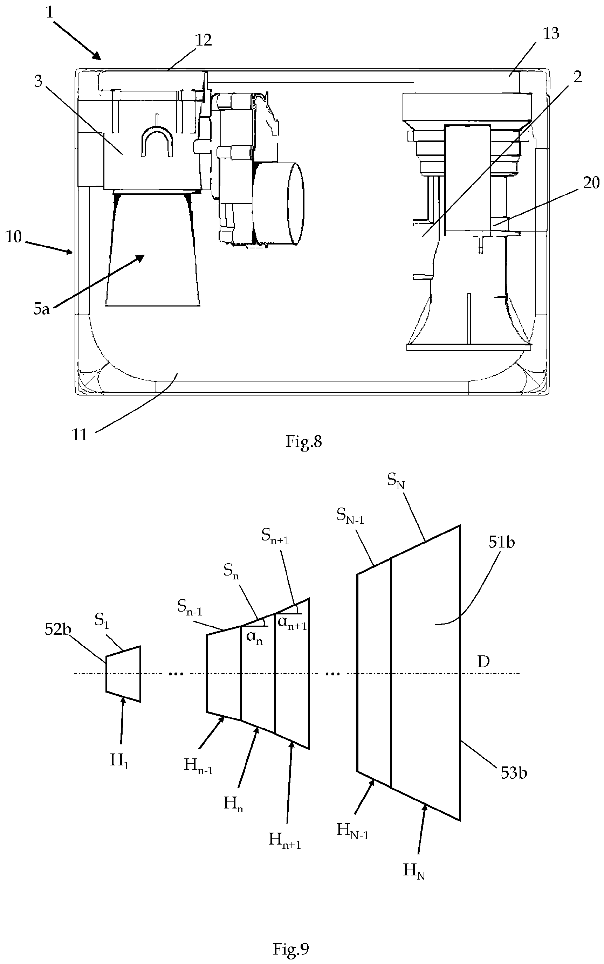

In alternative embodiments, the diffuser may have a different shape, for example, as shown in Figure 8, the diffuser 5a has a conical body with a shape corresponding to the duct it defines - substantially cylindrical in the example shown.

Furthermore, although it is preferable for the diffuser cavity to have a substantially circular cross-section as described above, nothing prevents that, in alternative embodiments (not shown), the inlet section and outlet section of the diffuser comprise respective ports with a non-circular profile: for example, an elliptical profile, or other geometrical shape, subject to the principle that the surface area of the outlet cross-section is greater than the area of the inlet cross-section.

Furthermore, the shape of the side profile of the diffuser is not necessarily constrained to a constant angle of inclination, or to a profile with a linear trend. For example, in an alternative embodiment (not shown), the side profile of the duct is defined by a curve, which defines a "trumpet" shape of the duct.

In a different embodiment and as schematically shown in Figure 9, an alternative diffuser comprises two or more sections $H_1$-$H_N$. In this case, the side profile of the duct 51b is defined by a (broken) line composed of a series of segments $S_1$-$S_N$, one connected to the other. An angle $\alpha_n$- defined by two adjacent segments $S_{n-1}$:$S_n$ assumes, in general, a different value from the angle $\alpha_{n+1}$ defined by another pair of adjacent segments $S_n$:$S_{n+1}$. In one embodiment, the sequence of angles $\alpha_1$:$\alpha_N$ has an increasing trend, i.e. each angle $\alpha_n$ has a smaller width than a subsequent angle $\alpha_{n+1}$. In other embodiments, the value of each angle $\alpha_1$:$\alpha_N$ is independent of the value of the preceding or following adjacent angle in the sequence. As shown in Figure 9, the generic angle $\alpha_n$ defined by two segments $S_{n-1}$:$S_n$ corresponds to the angle between the segment $S_n$ - i.e., the one closest to the outlet port 53 - and a line parallel to the development direction D of the duct 51b passing through the junction point between the two segments $S_{n-1}$ and $S_n$.

In general, although not limitedly, the diffuser according to the present invention defines a fluid duct with a side section increasing from a minimum value corresponding to the inlet port to a maximum value corresponding to the outlet port.

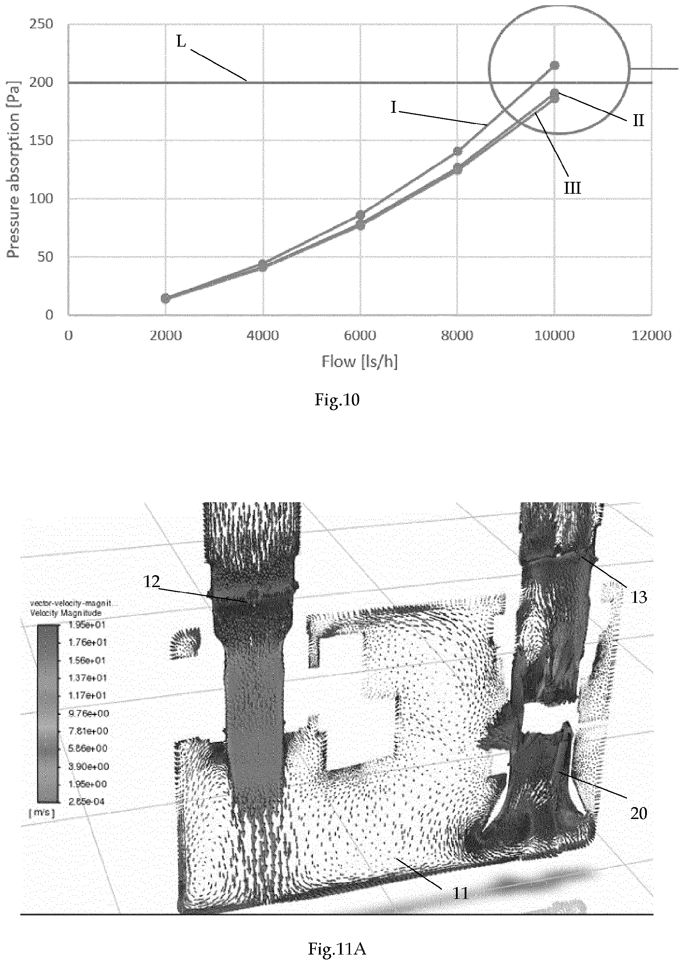

The diagram in Figure 10 shows curves of pressure absorption values measured in the laboratory using special instruments, for three gas meters:

1) gas meter not provided with the fluid-dynamic element (curve I);

2) gas meter provided with the fluid-dynamic element according to a first embodiment (curve II), and

3) gas meter provided with the fluid-dynamic according to a second embodiment (curve III).

The test instruments used comprises a hydraulic circuit adapted to be connected to the inlet and outlet ports of the gas meters tested and to impose a flow of fluid, typically air, with a desired velocity and pressure. The instruments comprise measuring sensors adapted to measure pressure and/or pressure variation values within the system, e.g. at the inlet and outlet passages.

Furthermore, the characteristics of the gas meters 1-3 are the same except for the presence/ absence/ type of the fluid-dynamic element.

The construction details of the fluid-dynamic elements according to the two embodiments of the gas meters 2 and 3 are shown in the following table:

|  | inlet port [mm] (diameter) | outlet port [mm] (diameter) | length [mm] |
|---|---|---|---|
| first embodiment | 20 | 27 | 40 |
| second embodiment | 20 | 28 | 46 |

As it can be seen, the main measures of both fluid-dynamic elements tested fall within the above-reported value ranges, identified as optimal by the Applicant.

The diagram in Figure 10 shows the pressure absorption values expressed in pascal Pa measured for each meter 1-3, as the volume flow rate of the gas flowing through the meter changes. Preferably, it must be considered that the pressure absorption corresponds to the value of the pressure difference to be imposed on the meter, in order to switch from the no-flow condition (i.e., zero flow, equivalent to a "stopped" or "closed" meter) to the flow condition at the desired flow rate.

The volume flow rate is expressed in ls/h, i.e. in *standard litres/hour,* and is equivalent to the flow rate of a flow of air passing through at a temperature of 20 °C and a pressure of 1.01325 bar, conditions corresponding to an air density of 1.2 kg/m$^3$.

The gas meter subjected to the tests described herein is characterised by a maximum flow rate Qmax of 10,000 ls/h, equivalent to 10 m$^3$/h - the meter therefore belongs to the category indicated as "G6".

The diagram in Figure 10 comprises a horizontal line indicating the legal limit imposed for that type of meter, which is 200 Pa (straight line L). It should be noted that the threshold value of 200 Pa is equivalent to the value of 2.0 mbar, which is the limit value imposed by the standard EN 17526:2018, section 5.5, for the pressure absorption that can be measured at the maximum flow rate Qmax, in the case of a meter characterised by a Qmax, so that 2.5 m$^3$/h $\leq$ Qmax $\leq$ 16 m$^3$/h, which is the range within which the Qmax value declared for the meter of the tests herein described, falls (equal to 10 m$^3$/h).

As it can be clearly seen, the pressure absorption measured at the flow rate of 10,000 1/h (i.e. 10 m$^3$/h) for the gas meter 1, which has no fluid-dynamic element, exceeds the limit set at 200 Pa, and therefore does not comply with the legal requirements.

In contrast, at the same maximum flow rate Qmax the pressure absorption measured for both gas meters 2 and 3 is below the 200 Pa limit. In other words, the fluid-dynamic element according to the embodiments of the present invention makes it possible to improve the performance of the gas meter in which it is implemented and to guarantee the safety of the meter due to compliance with the legal limit.

In general, it can be seen that the effect of the fluid elements applies throughout the entire range of flow rate values considered, with the effect being more intense as one approaches the upper limit of the flow rate values.

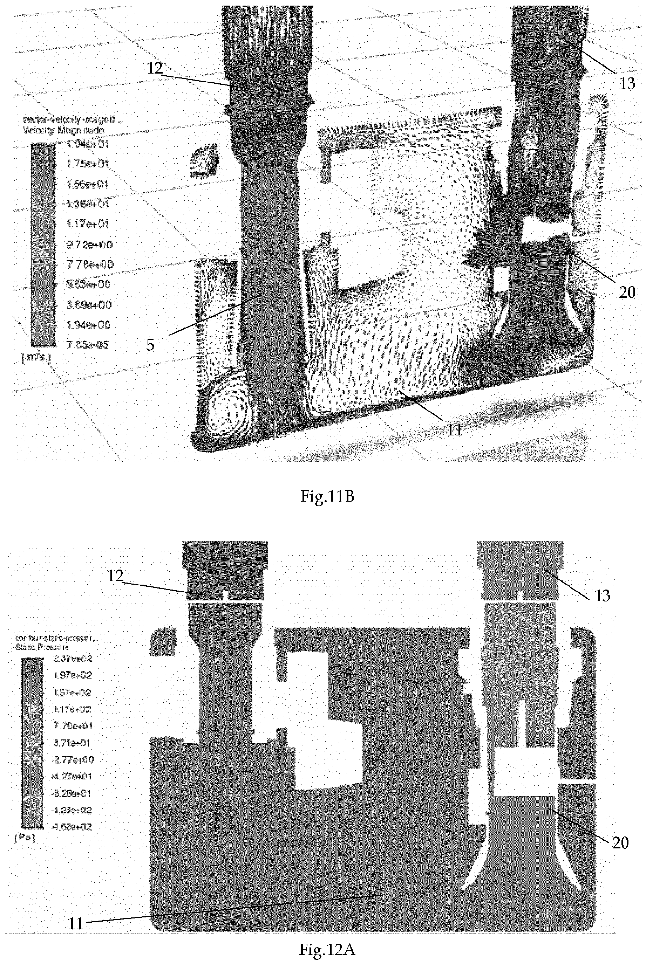

Figures 11A and 11B show the result of a gas flow simulation - CFD analysis - in terms of the gas flow velocity distribution calculated, all things being equal, for a gas meter without the fluid-dynamic element (Figure 11A), and for a gas meter provided with the fluid-dynamic element according to an embodiment of the present invention (Figure 11B).

In the gas meter without the fluid-dynamic element, the flow velocity values near the bottom wall of the meter compartment, i.e. the wall opposite the inlet nozzle of the meter itself, tend to assume higher values than the flow velocity values calculated in the same region of the meter provided with the fluid-dynamic element, thus relating to portions of the flow which are immediately close to the outlet port of the same fluid-dynamic element, as well as moving out of it.

The two simulations show that under the same conditions, the presence of the fluid-dynamic element imposes a decrease in the flow velocity in the region inside the measuring compartment, compared to the case of the meter without the fluid-dynamic element.

Surprisingly, the decrease in flow velocity appears to have a mitigating effect on turbulence within the gas flow. This results in a reduction in the overall fluid-dynamic resistance of the meter, compared to meters without the fluid-dynamic element.

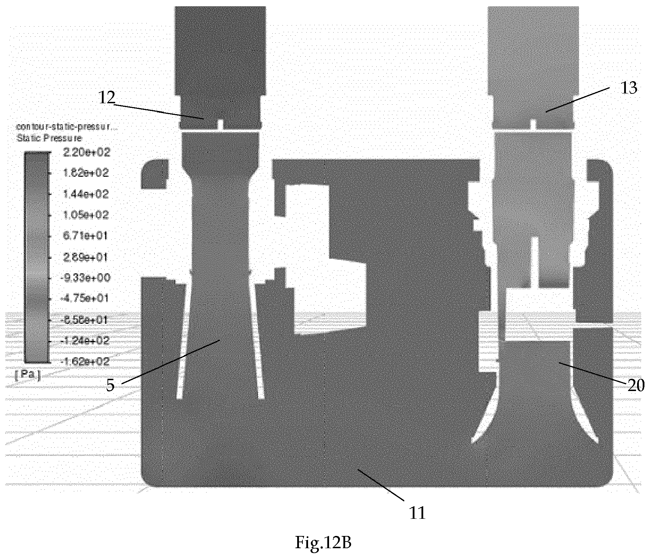

Figures 12A and Figure 12B show the result of a gas flow simulation (CFD analysis) in terms of the gas pressure distribution within the gas meter, calculated, all other things being equal, for a gas meter not provided with a fluid-dynamic element (Figure 12A), and for a gas meter provided with the fluid-dynamic element according to an embodiment of the invention (Figure 12B).

The maximum gas pressure - calculated at the inlet of the gas meter - for the gas meter without a fluid-dynamic element is 237 Pa, which is substantially higher than the maximum gas pressure - also calculated at the inlet of the gas meter - of the gas meter provided with a fluid-dynamic element, which is 220 Pa.

The two simulations thus show that, in the gas meter provided with the fluid-dynamic element, the difference in gas pressure between the inlet and outlet of the meter is lower, all things being equal, than the difference in gas pressure between the inlet and outlet calculated in the case of the measuring device without the fluid-dynamic element.

In fact, it can be assumed that all other things being equal, the gas pressure at the outlet has the same value for both simulated meters - as this value is determined by external conditions, and is not determined by the meter itself. It follows that with the use of the fluid-dynamic element, the pressure difference to be applied in order to obtain gas delivery at a desired flow rate and, ultimately, the overall internal fluid-dynamic resistance opposed to the flow of gas from the meter at the desired flow rate, is reduced compared to what can be observed for a meter without the fluid-dynamic element.

This condition is valid over the entire range of flow rate values for the meter operation.

Naturally, all the details can be replaced with other technically-equivalent elements.

For example, in an alternative embodiment (not shown), the sensor can be of another type, for example, an ultrasonic sensor. For the purposes of the present invention, what is relevant is that the sensor detects parameters (temperature, attenuation of ultrasonic waves, or still other) from which a value of the gas flow, passing through the meter, can be calculated.

Furthermore, in alternative embodiments (not shown), the number of gaps and walls is other than three, for example - non-limitedly - the body comprises two gaps and two walls or five gaps and five walls.

In conclusion, the materials used, as well as the contingent shapes and dimensions of the aforementioned devices, apparatuses and terminals, may be any according to the specific implementation requirements without thereby abandoning the scope of protection of the following claims.

In particular, the fluid-dynamic element is preferably made of a rigid thermoplastic material, produced by a process based on the injection moulding technique. However, the fluid-dynamic element according to the present invention may be made of metal material, plastic material, other suitable materials or a combination thereof, for example the fluid-dynamic element may comprise elements of different materials that are removably or non-removably coupled together.

## Claims

1. Fluid measuring device (1) comprising a hollow box-shaped body (10) delimiting a measuring compartment (11), wherein an inlet duct (12) and an outlet duct (13) allow a fluid flow into and out of the measuring compartment (11), measuring means (2; 20) arranged within the measuring compartment (11) and coupled to the outlet duct (13) in order to provide an indication of an amount of fluid flowing through the outlet duct (13), the meter having a maximum flow rate between 2.5 m$^3$/h $\leq Q_{max} \leq$ 16.0 m$^3$/h,

   **characterised in that**

   further comprising a fluid-dynamic element (5) in fluid communication with the inlet duct (12), the fluid-dynamic element (5) further comprising a duct (51) that is crossed by the entire flow of fluid coming from the inlet duct (12) before it enters the measurement compartment (11), the duct (51) comprising an inlet port (52), facing the inlet duct, and an outlet port (53), facing the measuring compartment (11), wherein a ratio of the surface area of the outlet port (53) to the surface area of the inlet port (52) is between approximately 1 and approximately 3.5.

2.  Fluid measuring device (1) according to claim 1, wherein the duct (51) of the fluid-dynamic element (5) has a side section increasing from a minimum value at the inlet port (52) to a maximum value at the outlet port (53).

3.  Fluid measuring device (1) according to claim 2, wherein the duct (51) of the fluid-dynamic element (5) has a truncated-cone or pyramid shape, where the inlet port (52) corresponds to the smaller base of the truncated cone or pyramid and the outlet port (53) corresponds to the larger base of the truncated cone or pyramid.

4.  Fluid measuring device (1) according to claim 1 or 2, wherein the duct (51) has a side section variable profile defined by a plurality of segments ($S_1$ - $S_N$) that are straight, where an angle ($\alpha_n$) defined by each pair of adjacent segments ($S_{n-1}$, $S_n$) takes on a different value from an angle ($\alpha_{n+1}$) defined by another pair of adjacent segments ($S_n$:$S_{n+1}$), where the angle defined by a pair of adjacent segments corresponds to the angle between the segment closest to the outlet port (53) of the pair of segments and a line parallel to a development direction (D) of the duct (51b) passing through the junction point between the two segments ($S_{n-1}$, $S_n$).

5.  Fluid measuring device (1) according to any one of the preceding claims wherein a ratio of the surface area of the outlet port (53) to the surface area of the inlet port (52) is between approximately 1 and approximately 3.

6.  Fluid measuring device (1) according to any one of the preceding claims, wherein a main length *L* of the duct (51) is between approximately 25 mm and approximately 55 mm.

7.  Fluid measuring device (1) according to claim 6, wherein a main length *L* of the duct (51) is between approximately 30 mm and approximately 50 mm.

8.  Fluid measuring device (1) according to any one of the preceding claims, wherein the fluid-dynamic element (5) may be coupled to a flow shut-off device (3) housed within the measuring compartment (11) and in turn coupled to the inlet duct (12) of the hollow body (10), and wherein the surface of the inlet port (52) corresponds substantially to an outlet port of the flow shut-off device (3).

9.  Fluid measuring device (1) according to claim 8, wherein the measuring means comprise a measuring duct (20) in fluid communication with the outlet duct (13), and
    wherein the fluid-dynamic element (5), the flow shut-off device (3) and the inlet duct (12) define an inlet assembly extending within the measuring compartment (11) along a direction parallel to a direction wherein the measuring duct (20) of the measuring means (2, 20) extends.

10. Fluid measuring device (1) according to any one of the preceding claims, wherein the fluid-dynamic element (5) is dimensioned so that the outlet port (53) of the duct (51) is at a minimum distance from a wall of the hollow body (10) or from another obstacle to the fluid flow comprised in the measuring compartment (11) not lower than approximately 5.0 mm.

11. Fluid measuring device (1) according to any one of the preceding claims, wherein the fluid-dynamic element (5) is dimensioned so that the outlet port (53) of the duct (51) is at a minimum distance from a wall of the hollow body (10) or from another obstacle to the fluid flow comprised in the measuring compartment (11) not lower than approximately 20.0 mm

12. Fluid measuring device (1) according to any one of the preceding claims, wherein the outlet port (53) of the fluid-dynamic element (5) faces a wall of the hollow body (10) opposite a wall wherein the outlet duct (13) is formed.

13. Fluid measuring device (1) according to any one of the preceding claims, wherein the fluid-dynamic element (5) comprises:

    a cylindrical or prismatic body,
    a plurality of gaps (55) formed in a wall of the cylindrical or prismatic body, the gaps (55) being blind cavities and opened at the inlet port (52) of the duct (51) extending within the body towards the outlet port (53) with a cross section decreasing in the direction from the inlet port (52) to the outlet port (53), and a plurality of partition walls (56), each being placed between a pair of gaps (55).

**14.** Fluid measuring device (1) according to any one of the preceding claims, wherein the fluid-dynamic element (5) comprises:

a cylindrical or prismatic body, and
at least one fixing element (54) adapted to fasten the diffuser to a flow shut-off device (3) housed inside the measuring compartment (11) and in turn coupled to the inlet duct (12) of the hollow body (10).

**15.** Fluid measuring device (1) according to any one of the preceding claims, wherein the fluid-dynamic element (5) is made of thermoplastic material by an injection moulding process.

Fig.1

1

12    13    10    11    142    141

31    2    201    14

3    15    20

5

Fig.2

Fig.3

54

55

52

56

5

Fig.4

5

54

52

56

55

V

V

Fig.5

5

54

53

Fig.6

54

52

D

54

56

55

56

5

L

51

53

Fig.7

Fig.8

Fig.9

Fig.10

Fig.11A

Fig.11B

Fig.12A

Fig.12B

Europäisches
Patentamt

European
Patent Office

Office européen
des brevets

# EUROPEAN SEARCH REPORT

**Application Number**

EP 24 17 4642

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2015 148525 A (AICHI TOKEI DENKI KK) 20 August 2015 (2015-08-20) | 1-12,14 | INV. G01F1/684 |
| A | * figures 1,2 * | 13 | G01F15/00 G01F15/14 |
| X | IT 2018 0000 4317 A1 (METERSIT) 9 October 2019 (2019-10-09) | 1,6-11, 15 | ADD. |
| A | * paragraph [0082]; figure 2 * | 13 | G01F1/688 |
| A | JP 2017 129391 A (YAZAKI ENERGY SYSTEM CORP) 27 July 2017 (2017-07-27) * figures 1,2 * | 1-15 | |
| A | JP H06 69748 U (TOKICO CO, LTD) 30 September 1994 (1994-09-30) * figure 1 * | 1-15 | |

**TECHNICAL FIELDS SEARCHED (IPC)**

G01F

The present search report has been drawn up for all claims

| Place of search | Date of completion of the search | Examiner |
|---|---|---|
| The Hague | 26 September 2024 | Reeb, Bertrand |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 4642

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2024

| Patent document cited in search report | | Publication date | Patent family member(s) | | Publication date |
|---|---|---|---|---|---|
| JP 2015148525 | A | 20-08-2015 | JP | 6214044 B2 | 18-10-2017 |
| | | | JP | 2015148525 A | 20-08-2015 |
| IT 201800004317 | A1 | 09-10-2019 | | | |
| JP 2017129391 | A | 27-07-2017 | CN | 106979805 A | 25-07-2017 |
| | | | JP | 6326073 B2 | 16-05-2018 |
| | | | JP | 2017129391 A | 27-07-2017 |
| | | | TW | 201736807 A | 16-10-2017 |
| JP H0669748 | U | 30-09-1994 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6584872 B
- CN 208833306
- US 2020056916 A
- US 2019003868 A
- JP 2021117215 A
- JP 2021105545 A
- JP 2017129391 A
- JP H0669748 B